# EUROPEAN PATENT APPLICATION

(11) **EP 3 051 382 A1**
(43) Date of publication of application: **03.08.2016**
(21) Application number: 16152965.6
(22) Date of filing: 27.01.2016
(51) Int. Cl.: G06F 1/32

(54) **ELECTRONIC DEVICE AND METHOD FOR MANAGING POWER**

(30) Priority: 28.01.2015 KR 20150013335
(71) Applicant: Samsung Electronics Co., Ltd., Gyeonggi-do 16677 (KR)
(72) Inventor: KIM, Shinho, 16677 Gyeonggi-do (KR); KIM, Wonseob, 16677 Gyeonggi-do (KR); BAE, Hangeun, 16677 Gyeonggi-do (KR); LEE, Junebum, 16677 Gyeonggi-do (KR); LEE, Cheolho, 16677 Gyeonggi-do (KR); CHANG, Ilhyung, 16677 Gyeonggi-do (KR)
(74) Representative: Jenkins, Richard Gavin

(57) **Abstract**

An electronic device having a universal serial bus (USB) type-C interface and a power management method thereof are provided. In the method, when the electronic device is connected with another electronic device through a USB cable, the electronic device recognizes a USB port through a configuration channel. Also, the electronic device recognizes a connection direction of the USB cable and receives power information from the other electronic device through the configuration channel. Then, based on the received power information, the electronic device determines whether to enter a downstream facing port (DFP) mode or an upstream facing port (UFP) mode.

## Description

### 1. Field of the Invention

The present invention generally relates to a method for managing electric power when electronic devices having a universal serial bus (USB) type-C interface are connected with each other through the USB, and also relates to an electronic device implementing the method.

### 2. Description of the Related Art

A variety of mobile devices such as a smart phone, a tablet PC, a laptop PC, and the like are supplied with electric power from a rechargeable battery equipped therein. Typically, such a mobile device allows only a direct charging process using a travel adapter (TA) or a USB cable in order to supply electric power to the battery.

However, certain electronic devices having a USB type-C interface further allow a battery charging process through the supply of electric power between such devices. This charging process uses power delivery protocol communication through a configuration channel terminal of the USB type-C interface.

### SUMMARY

The present invention has been made to address at least the above problems and disadvantages and to provide at least the advantages described below.

Accordingly, an aspect of the present invention provides a power management technique of an electronic device. When an electronic device having a USB type-C interface is connected with another electronic device, these devices may exchange information about power by using power delivery protocol communication, and then based on such information, manage electric power.

According to an aspect of the present invention, a power management method of an electronic device having a universal serial bus (USB) type-C interface includes recognizing a USB port through a configuration channel when the electronic device is connected with another electronic device through a USB cable; recognizing a connection direction of the USB cable; receiving power information from the other electronic device through the configuration channel; and determining, based on the received power information, whether to enter a downstream facing port (DFP) mode or an upstream facing port (UFP) mode.

According to another aspect of the present invention, an electronic device includes a universal serial bus (USB) type-C interface; a display; a battery; and a processor configured to control the USB type-C interface, the display, and the battery. In the electronic device, the processor is further configured to recognize a USB port through a configuration channel when the electronic device is connected with another electronic device through a USB cable, to recognize a connection direction of the USB cable, to receive power information from the other electronic device through the configuration channel, and to determine, based on the received power information, whether to enter a downstream facing port (DFP) mode or an upstream facing port (UFP) mode.

### BRIEF DESCRIPTION OF THE DRAWINGS

The above and other aspects, features and advantages of the present disclosure will be more apparent from the following detailed description taken in conjunction with the accompanying drawings, in which:
FIG. 1 is a schematic diagram illustrating a network environment including an electronic device according to an embodiment of the present invention;
FIG. 2 is a block diagram illustrating an electronic device according to various embodiments of the present invention;
FIG. 3 is a block diagram illustrating a program module according to various embodiments of the present invention;
FIG. 4 is a flowchart illustrating a method for managing electric power of an electronic device according to various embodiments of the present invention;
FIG. 5 is a flowchart illustrating a step of entering a DFP mode or a UFP mode depending on power information at an electronic device according to various embodiments of the present invention;
FIG. 6 is a diagram illustrating a user interface indicating a power exchange state of an electronic device according to an embodiment of the present invention; and
FIG. 7 is a diagram illustrating a user interface indicating a power exchange state of an electronic device according to another embodiment of the present invention.

### DETAILED DESCRIPTION

Various embodiments of the present invention are described below with reference to the accompanying drawings. However, the scope of the present invention is not intended to be limited to an embodiment of the present disclosure and it is to be understood that the present disclosure covers all modifications, equivalents, and/or alternatives falling within the scope of the present invention, as defined by the appended claims and their equivalents. In relation to a description of the accompanying drawings, like reference numerals refer to the same components.

In the present disclosure, the terms "have," "may have," "include," or "may include" signify the presence of a certain feature (for example, a number, a function, an operation, or a component like a part), and do not exclude the presence of an additional feature.

In the present disclosure, the expressions "A or B," "at least one of A or/and B," and '"one or more of A or/and B" may cover all possible combinations of enumerated items. For example, the expressions "A or B," "at least one of A and B," and "at least one of A or B" may represent all of the cases of (1) inclusion of at least one A, (2) inclusion of at least one B, and (3) at least one A and at least one B.

The terms, as used in describing an embodiment of the present invention, "first" and "second" may modify the names of various components irrespective of sequence and/or importance, but do not limit the components. These expressions may be used to distinguish one component from another component. For example, a first User Equipment (UE) and a second UE may indicate different UEs irrespective of sequence or importance. For example, a first component may be referred to as a second component and vice versa without departing from the scope and spirit of the present invention.

When it is indicated that a component (for example, a first component) is "operatively or communicatively coupled with/to" or "connected to" another component (for example, a second component), it should be understood that the component is connected to the other component directly or through any other component (for example, a third component).In contrast, when it is said that a component (for example, a first component) is "directly connected to" or "directly coupled to" another component (for example, a second component), it may be understood that there is no other component (for example, a third component) between the components.

The expression "configured to" as used herein may be replaced with, for example, the expression "suitable for," "having the capacity to," "designed to," "adapted to," "made to," or "capable of" under certain circumstances. The expression "configured to" may not necessarily indicate "specifically designed to" in hardware. Instead, the expression "configured to" may indicate that a device may be "capable of" with another device or part. For example, "a processor configured to execute A, B, and C" may indicate a dedicated processor (for example, an embedded processor) for performing the corresponding operations or a general-purpose processor (for example, a Central Processing Unit (CPU) or an application processor) for performing the corresponding operations.

The terms as used in the present disclosure are provided to describe a certain embodiments of the present invention, but are not intended to limit the scope of other embodiments of the present invention. It is to be understood that singular forms include plural referents unless the context clearly dictates otherwise. The terms and words including technical or scientific terms used in the following description and claims may have the same meanings as generally understood by those skilled in the art. The terms as generally defined in dictionaries may be interpreted as having the same or similar meanings as or to contextual meanings of related technology. Unless otherwise defined, the terms should not be interpreted as ideally or excessively formal meanings. When necessary, even the terms as defined in the present disclosure may not be interpreted as excluding an embodiment of the present invention.

According to an embodiment of the present invention, an electronic device may be at least one of, for example, a smartphone, a tablet Personal Computer (PC), a mobile phone, a video phone, an e-book reader, a desktop PC, a laptop PC, a netbook computer, a workstation, a server, a Personal Digital Assistant (PDA), a Portable Multimedia Player (PMP), a Moving Picture Experts Group (MPEG-1) audio layer-3 (MP3) player, a mobile medical equipment, a camera, and a wearable device (for example, smart glasses, a Head-Mounted Device (HMD), electronic clothes, an electronic bracelet, an electronic necklace, an electronic appcessory, an electronic tattoo, a smart mirror, or a smart watch).

According to an embodiment of the present invention, an electronic device may be a smart home appliance. For example, a smart home appliance may be at least one of a Television (TV), a Digital Versatile Disk (DVD) player, an audio player, a refrigerator, an air conditioner, a vacuum cleaner, an oven, a microwave oven, a washer, an air purifier, a set-top box, a home automation control panel, a security control panel, a TV box (for example, Samsung HomeSync™, Apple TV®, Google TV™, or the like), a game console (for example, Xbox™, PlayStation®, or the like), an electronic dictionary, an electronic key, a camcorder, and an electronic picture frame.

According to an embodiment of the present invention, an electronic device may be at least one of a medical device (for example, a portable medical meter such as a blood glucose meter, a heart rate meter, a blood pressure meter, or a temperature meter, a Magnetic Resonance Angiography (MRA) device, a Magnetic Resonance Imaging (MRI) device, a Computed Tomography (CT) device, an imaging device, an ultrasonic device, or the like), a navigation device, a Global Positioning System (GPS) receiver, an Event Data Recorder (EDR), a Flight Data Recorder (FDR), an automotive infotainment device, a naval electronic device (for example, a naval navigation device, a gyrocompass, or the like), an avionic electronic device, a security device, an in-vehicle head unit, an industrial or consumer robot, an Automated Teller Machine (ATM) in a financial facility, a Point Of Sale (POS) device in a shop, an Internet of Things (IoT) device (for example, a light bulb, various sensors, an electricity or gas meter, a sprinkler, a fire alarm, a thermostat, a street lamp, a toaster, sporting goods, a hot water tank, a heater, or a boiler), and the like.

According to an embodiment of the present invention, an electronic device may be at least one of furniture, a part of a building/structure, an electronic board, an electronic signature receiving device, a projector, and various measuring devices (for example, water, electricity, gas or electro-magnetic wave measuring devices). An electronic device according to an embodiment of the present invention may be one or a combination of two or more of the foregoing devices. Also, an electronic device according to an embodiment of the present invention may be a flexible device. In addition, it will be apparent to one having ordinary skill in the art that an electronic device according to the present invention is not limited to the foregoing devices and covers an electronic device that will be developed.

With reference to the accompanying drawings, an electronic device according to an embodiment of the present invention is described below. In the present disclosure, the term "user" may refer to a person or a device (for example, an artificial intelligence electronic device) that uses an electronic device.

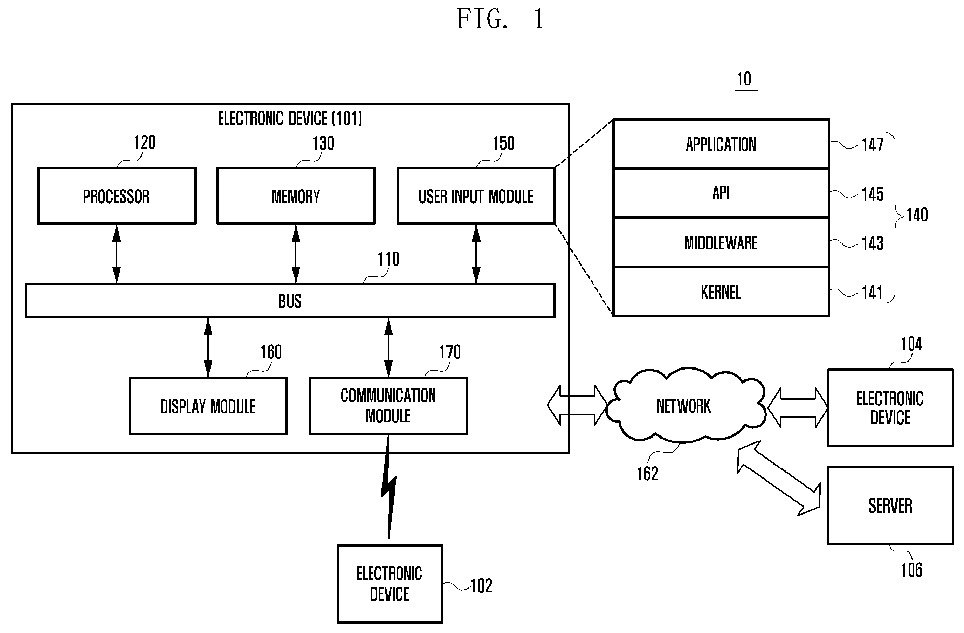

FIG. 1 illustrates a network environment 10 including an electronic device 101 according to various embodiments of the present invention. Referring to FIG. 1, the electronic device 101 includes a bus 110, a processor 120, a memory 130, a user input module (input/output interface) 150, a display module 160 and a communication interface or module 170.

The bus 110 may be a circuit connecting the above described components and for transmitting communication (for example, a control message) between the above described components.

The processor 120 receives commands from other components (for example, the memory 130, the user input module 150, the display module 160, the communication module 170) through the bus 110, analyzes the received commands, and executes calculations or data processing according to the analyzed commands.

The memory 130 stores commands or data received from the processor 120 or the other components or generated by the processor 120 or other components. The memory 130 may include programming modules 140, for example, a kernel 141, middleware 143, an Application Programming Interface (API) 145, and an application 147. Each of the aforementioned programming modules may be implemented by software, firmware, hardware, or a combination of two or more thereof.

The kernel 141 controls or manages system resources (for example, the bus 110, the processor 120, or the memory 130) used for executing an operation or function implemented by the other remaining programming modules, for example, the middleware 143, the API 145, or the application 147. Further, the kernel 141 provides an interface for accessing individual components of the electronic device 101 from the middleware 143, the API 145, or the application 147 to control or manage the components.

The middleware 143 performs a relay function of allowing the API 145 or the application 147 to communicate with the kernel 141 to exchange data. Further, in operation requests received from the application 147, the middleware 143 performs a control for the operation requests (for example, scheduling or load balancing) by using a method of assigning a priority, by which system resources (for example, the bus 110, the processor 120, the memory 130 and the like) of the electronic device 101 can be used, to the application 147.

The API 145 is an interface by which the application 147 can control a function provided by the kernel 141 or the middleware 143 and includes, for example, at least one interface or function (for example, command) for a file control, a window control, image processing, or a character control.

The user input module 150 can receive, for example, a command and/or data from a user, and transfer the received command and/or data to the processor 120 and/or the memory 130 through the bus 110. The display module 160 can display an image, a video, and/or data to a user.

According to an embodiment, the display module 160 includes a display and may display a graphic user interface image for interaction between the user and the electronic device 101. According to various embodiments, the graphic user interface image may include interface information to activate a function for correcting color of the image to be projected onto the screen. The interface information may be in the form of, for example, a button, a menu, or an icon. The communication module 170 connects communication between the electronic device 101 and an external device (for example, electronic device 102, 104 or server 106). For example, the communication module 170 may access a network 162 through wireless or wired communication to communicate with the external devices. The wireless communication includes at least one of, for example, wireless fidelity (WiFi), bluetooth (BT), near field communication (NFC), a global positioning system (GPS), and cellular communication (for example, LTE, LTE-A, CDMA, WCDMA, UMTS, WiBro or GSM). The wired communication may include at least one of, for example, a universal serial bus (USB), a high definition multimedia interface (HDMI), recommended standard 232 (RS-232), and a plain old telephone service (POTS).

According to an embodiment, the server 106 supports driving of the electronic device 101 by performing at least one operation (or function) implemented by the electronic device 101. For example, the server 106 may include a communication control server module that supports the communication module 170 implemented in the electronic device 101. The communication control server module may include at least one of the components of the communication module 170 to perform (on behalf of) at least one operation performed by the communication module 170.

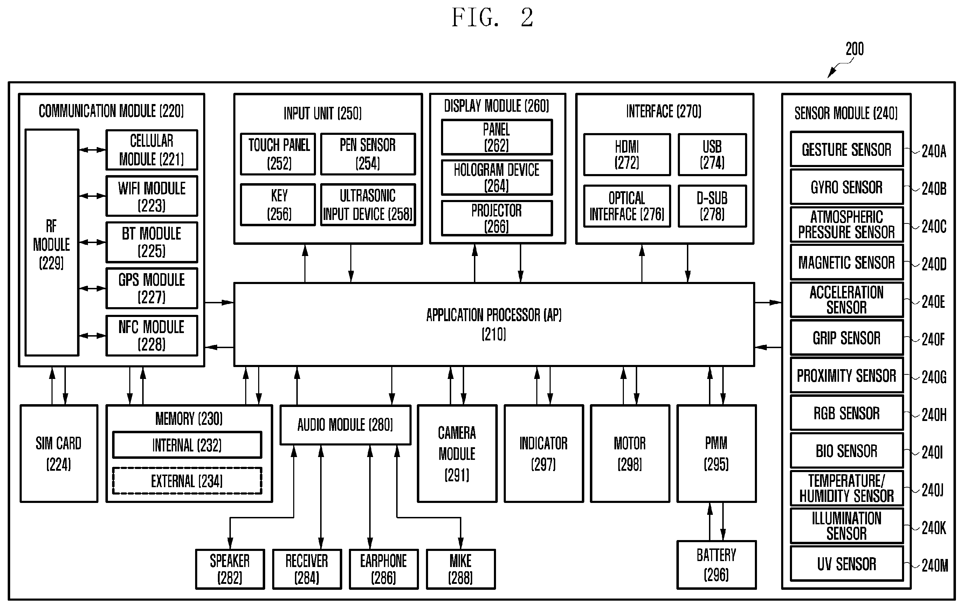

FIG. 2 is a block diagram of an electronic device 200 according to various embodiments of the present disclosure. The electronic device 200 may configure, for example, a whole or a part of the electronic device 101 illustrated in FIG. 1. Referring to FIG. 2, the electronic device 200 includes one or more application processors (APs) 210, a communication module 220, a subscriber identification module (SIM) card 224, a memory 230, a sensor module 240, an input unit 250, a display module 260, an interface 270, an audio module 280, a camera module 291, a power managing module (PMM) 295, a battery 296, an indicator 297, and a motor 298.

The AP 210 operates an operating system (OS) or an application program so as to control a plurality of hardware or software component elements connected to the AP 210 and execute various data processing and calculations including multimedia data. The AP 210 may be implemented by, for example, a System on Chip (SoC). According to an embodiment, the AP 210 may further include a Graphic Processing Unit (GPU).

The communication module 220 (for example, communication module 170) transmits/receives data in communication between different electronic devices (for example, the electronic device 104 and the server 106) connected to the electronic device 200 (or 100 through a network. According to an embodiment, the communication module 220 includes a cellular module 221, a WiFi module 223, a BT module 225, a GPS module 227, an NFC module 228, and a radio frequency (RF) module 229.

The cellular module 221 provides a voice, a call, a video call, a short message service (SMS), or an Internet service through a communication network (for example, Long Term Evolution (LTE), LTE-A, Code Division Multiple Access (CDMA), Wideband CDMA (WCDMA), UMTS, WiBro, GSM or the like). Further, the cellular module 221 may distinguish and authenticate electronic devices within a communication network by using the SIM card 224. According to an embodiment, the cellular module 221 performs at least some of the functions which can be provided by the AP 210. For example, the cellular module 221 may perform at least some of the multimedia control functions.

According to an embodiment, the cellular module 221 may include a communication processor (CP). Further, the cellular module 221 may be implemented by, for example, an SoC.

According to an embodiment, the AP 210 or the cellular module 221 may load a command or data received from at least one of a non-volatile memory and other components connected to each of the AP 210 and the cellular module 221 to a volatile memory and process the loaded command or data. Further, the AP 210 or the cellular module 221 may store data received from at least one of other components or generated by at least one of other components in a non-volatile memory.

Each of the WiFi module 223, the BT module 225, the GPS module 227, and the NFC module 228 may include, for example, a processor for processing data transmitted/received through the corresponding module. Although the cellular module 221, the WiFi module 223, the BT module 225, the GPS module 227, and the NFC module 228 are shown as blocks separate from each other, at least some (for example, two or more) of the cellular module 221, the WiFi module 223, the BT module 225, the GPS module 227, and the NFC module 228 may be included in one Integrated Chip (IC) or one IC package according to an embodiment. For example, at least some of the processors corresponding to the cellular module 221, the WiFi module 223, the BT module 225, the GPS module 227, and the NFC module 228 may be implemented by one SoC.

The RF module 229 transmits/receives data, for example, an RF signal. Although not illustrated, the RF module 229 may include, for example, a transceiver, a Power Amp Module (PAM), a frequency filter, a Low Noise Amplifier (LNA) or the like. Further, the RF module 229 may further include a component for transmitting/receiving electronic waves over a free air space in wireless communication, for example, a conductor, a conducting wire, or the like. Although the cellular module 221, the WiFi module 223, the BT module 225, the GPS module 227, and the NFC module 228 share one RF module 229 in FIG. 2, at least one of the cellular module 221, the WiFi module 223, the BT module 225, the GPS module 227, and the NFC module 228 may transmit/receive an RF signal through a separate RF module according to an embodiment.

The SIM card 224 may be inserted into a slot formed in a particular portion of the electronic device. The SIM card 224 includes unique identification information (for example, an Integrated Circuit Card IDentifier (ICCID)) or subscriber information (for example, an International Mobile Subscriber Identity (IMSI)).

The memory 230 (or 130) may include an internal memory 232 or an external memory 234. The internal memory 232 may include, for example, at least one of a volatile memory (for example, a random access memory (RAM), a dynamic RAM (DRAM), a static RAM (SRAM), a synchronous dynamic RAM (SDRAM), and the like), and a non-volatile Memory (for example, a read only memory (ROM), a one time programmable ROM (OTPROM), a programmable ROM (PROM), an erasable and programmable ROM (EPROM), an electrically erasable and programmable ROM (EEPROM), a mask ROM, a flash ROM, a NAND flash memory, an NOR flash memory, and the like).

According to an embodiment, the internal memory 232 may be a solid state drive (SSD). The external memory 234 may further include a flash drive, for example, a compact flash (CF), a secure digital (SD), a micro secure digital (Micro-SD), a mini secure digital (Mini-SD), an extreme digital (xD), or a memory stick. The external memory 234 may be functionally connected to the electronic device 200 through various interfaces. According to an embodiment, the electronic device 200 may further include a storage device (or storage medium) such as a hard drive.

The sensor module 240 measures a physical quantity or detects an operation state of the electronic device 200, and converts the measured or detected information to an electronic signal. The sensor module 240 may include, for example, at least one of a gesture sensor 240A, a gyro sensor 240B, an atmospheric pressure (barometric) sensor 240C, a magnetic sensor 240D, an acceleration sensor 240E, a grip sensor 240F, a proximity sensor 240G, a color sensor 240H (for example, red, green, and blue (RGB) sensor) 240H, a biometric sensor 240I, a temperature/humidity sensor 240J, an illumination (light) sensor 240K, and an ultra violet (UV) sensor 240M. Additionally or alternatively, the sensor module 240 may include, for example, a E-nose sensor, an electromyography (EMG) sensor, an electroencephalogram (EEG) sensor, an electrocardiogram (ECG) sensor, an infrared (IR) sensor, an iris sensor, a fingerprint sensor, and the like. The sensor module 240 may further include a control circuit for controlling one or more sensors included in the sensor module 240.

The input device 250 includes a touch panel 252, a (digital) pen sensor 254, a key 256, and an ultrasonic input device 258. For example, the touch panel 252 may recognize a touch input in at least one type of a capacitive type, a resistive type, an infrared type, and an acoustic wave type. The touch panel 252 may further include a control circuit. In the capacitive type, the touch panel 252 can recognize proximity as well as a direct touch. The touch panel 252 may further include a tactile layer. In this case, the touch panel 252 provides a tactile reaction to the user.

The (digital) pen sensor 254 may be implemented, for example, using a method identical or similar to a method of receiving a touch input of the user, or using a separate recognition sheet. The key 256 may include, for example, a physical button, an optical key, or a key pad. The ultrasonic input device 258 is a device which can detect an acoustic wave by a microphone 288 of the electronic device 200 through an input means generating an ultrasonic signal to identify data and can perform wireless recognition. According to an embodiment, the electronic device 200 receives a user input from an external device (for example, computer or server) connected to the electronic device 200 by using the communication module 220.

The display module 260 (or160 includes a panel 262, a hologram device 264, and a projector 266. The panel 262 may be, for example, a Liquid Crystal Display (LCD) or an Active Matrix Organic Light Emitting Diode (AM-OLED). The panel 262 may be implemented to be, for example, flexible, transparent, or wearable. The panel 262 may be configured by the touch panel 252 and one module. The hologram device 264 shows a stereoscopic image in the air by using interference of light. The projector 266 projects light on a screen to display an image. For example, the screen may be located inside or outside the electronic device 200. According to an embodiment, the display module 260 may further include a control circuit for controlling the panel 262, the hologram device 264, and the projector 266.

The interface 270 includes, for example, an HDMI 272, a USB) 274, an optical interface 276, and a D-subminiature (D-sub) 278. The interface 270 may be included in, for example, the communication module 170 illustrated in FIG. 1. Additionally or alternatively, the interface 270 may include, for example, a mobile high-definition link (MHL) interface, an SD) card/multimedia card (MMC), or an infrared data association (IrDA) standard interface.

The audio module 280 bi-directionally converts a sound and an electronic signal. At least some components of the audio module 280 may be included in, for example, the user input module (input/output interface) 150 illustrated in FIG. 1. The audio module 280 processes sound information input or output through, for example, a speaker 282, a receiver 284, an earphone 286, the microphone 288, or the like.

The camera module 291 is a device which can photograph a still image and a video. According to an embodiment, the camera module 291 may include one or more image sensors (for example, a front sensor or a back sensor), an image signal processor (ISP) or a flash (for example, an LED or xenon lamp).

The PMM 295 manages power of the electronic device 200. Although not illustrated, the PMM 295 may include, for example, a power management integrated circuit (PMIC), a charger IC, or a battery gauge.

The PMIC may be mounted to, for example, an integrated circuit or an SoC semiconductor. A charging method may be divided into wired and wireless methods. The charger IC charges a battery and prevents overvoltage or overcurrent from flowing from a charger. According to an embodiment, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier, or the like may be added.

The battery gauge measures, for example, a remaining quantity of the battery 296, or a voltage, a current, or a temperature during charging. The battery 296 may store or generate electricity and supply power to the electronic device 200 by using the stored or generated electricity. The battery 296 may include a rechargeable battery or a solar battery. The indicator 297 shows particular statuses of the electronic device 200 or a part (for example, AP 210) of the electronic device 200 using, for example, a booting status, a message status, a charging status and the like. The motor 298 converts an electrical signal to a mechanical vibration.

Although not illustrated, the electronic device 200 may include a processing unit (for example, GPU) for supporting a mobile TV. The processing unit for supporting the mobile TV may process, for example, media data according to a standard of digital multimedia broadcasting (DMB), digital video broadcasting (DVB), media flow or the like.

Each of the components of the electronic device according to various embodiments of the present disclosure may be implemented by one or more components and the name of the corresponding component may vary depending on a type of the electronic device. The electronic device may include at least one of the above described components, a few of the components may be omitted, or additional components may be further included. Also, some of the components of the electronic device may be combined to form a single entity, and thus may equivalently execute functions of the corresponding components before being combined.

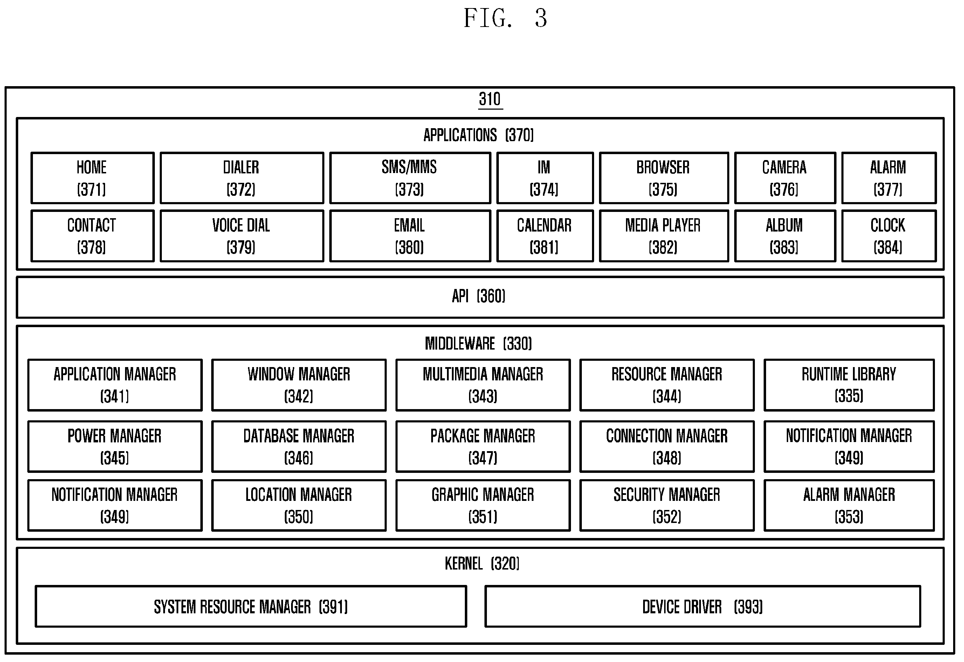

FIG. 3 is a block diagram of a programming module 310 according to an embodiment. The programming module 310 (or 140) may be included (stored) in the electronic device 101 (for example, in memory 130) illustrated in FIG. 1. At least some of the programming module 310 may be formed of software, firmware, hardware, or a combination of at least two of software, firmware, and hardware. The programming module 310 may be executed in the hardware of electronic device 200 to include an Operating System (OS) controlling resources related to the electronic device 100 or various applications 370 driving on the OS. For example, the OS may be Android™, iOS™, Windows™, Symbian™, Tizen™, Bada OS™, or the like. Referring to FIG. 3, the programming module 310 includes a kernel 320, a middleware 330, an Application Programming Interface (API) 360, and applications 370.

The kernel 320 (or 141 includes a system resource manager 391 and a device driver 393. The system resource manager 321 may include, for example, a process manager, a memory manager, and a file system manager. The system resource manager 391 performs a system resource control, allocation, and recall. The device driver 393 may include, for example, a display driver, a camera driver, a Bluetooth driver, a shared memory driver, a USB driver, a keypad driver, a WiFi driver, and an audio driver. Further, according to an embodiment, the device driver 393 may include an inter-process communication (IPC) driver.

The middleware 330 includes a plurality of modules prepared in advance to provide a function required in common by the applications 370. Further, the middleware 330 provides a function through the API 360 to allow the application 370 to efficiently use limited system resources within the electronic device. For example, as illustrated in FIG. 3, the middleware 330 (or 143 includes at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, a security manager 352, and an alarm manager 353. The runtime library 335 includes, for example, a library module used by a complier to add a new function through a programming language while the application 370 is executed. According to an embodiment, the runtime library 335 executes input and output, management of a memory, a function associated with an arithmetic function and the like.

The application manager 341 manages, for example, a life cycle of at least one of the applications 370. The window manager 342 manages GUI resources used on the screen. The multimedia manager 343 detects a format required for reproducing various media files and performs an encoding or a decoding of a media file by using a codec suitable for the corresponding format. The resource manager 344 manages resources such as a source code, a memory, or a storage space of at least one of the applications 370.

The power manager 345 operates together with a Basic Input/Output System (BIOS) to manage a battery or power and provides power information required for the operation. The database manager 346 manages generation, search, and change of a database to be used by at least one of the applications 370. The package manager 347 manages an installation or an update of an application distributed in a form of a package file.

The connection manager 348 manages, for example, a wireless connection such as WiFi or Bluetooth. The notification manager 349 displays or notifies a user of an event such as an arrival message, an appointment, a proximity alarm or the like, in a manner that does not disturb the user. The location manager 350 manages location information of the electronic device. The graphic manager 351 manages a graphic effect provided to the user or a user interface related to the graphic effect. The security manager 352 provides a general security function required for a system security or a user authentication. According to an embodiment, when the electronic device has a call function, the middleware 330 may further include a telephony manager for managing a voice of the electronic device or a video call function. The middleware 330 may generate a new middleware module through a combination of various functions of the aforementioned internal component modules and use the generated new middleware module. The middleware 330 may provide a module specified for each type of operating system to provide a differentiated function. Further, the middleware 330 may dynamically delete some of the conventional components or add new components. Accordingly, some of the components described in the embodiment of the present disclosure may be omitted, replaced with other components having different names but performing similar functions, or other components may be further included.

The API 360 (or 145) is a set of API programming functions, and may be provided with a different configuration according to an operating system. For example, in Android or iOS, a single API set may be provided for each platform. In Tizen, two or more API sets may be provided.

The applications 370, which may include an application similar to the application 134, may include, for example, a preloaded application and/or a third party application. The applications 370 may include a home application 371, a dialer application 372, a short messaging service (SMS)/multimedia messaging service (MMS) application 373, an instant messaging (IM) application 374, a browser application 375, a camera application 376, an alarm application 377, a contact application 378, a voice dial application 379, an email application 380, a calendar application 381, a media player application 382, an album application 383, and a clock application 384. However, the present embodiment is not limited thereto, and the applications 370 may include any other similar and/or suitable application. At least a part of the programming module 310 can be implemented by commands stored in computer-readable storage media. When the commands are executed by at least one processor, e.g. the AP 210, at least one processor can perform functions corresponding to the commands. The computer-readable storage media may be, for example, the memory 230. At least a part of the programming module 310 can be implemented, e.g. executed, by, for example, the AP 210. At least a part of the programming module 310 may include, for example, a module, a program, a routine, a set of instructions and/or a process for performing at least one function.

The titles of the aforementioned elements of the programming module 310 may vary depending on the type of the OS. The programming module according to the present disclosure may include at least one of the aforementioned elements and/or may further include other additional elements, and/or some of the aforementioned elements may be omitted. The operations performed by a programming module and/or other elements according to the present disclosure may be processed through a sequential, parallel, repetitive, and/or heuristic method, and some of the operations may be omitted and/or other operations may be added.

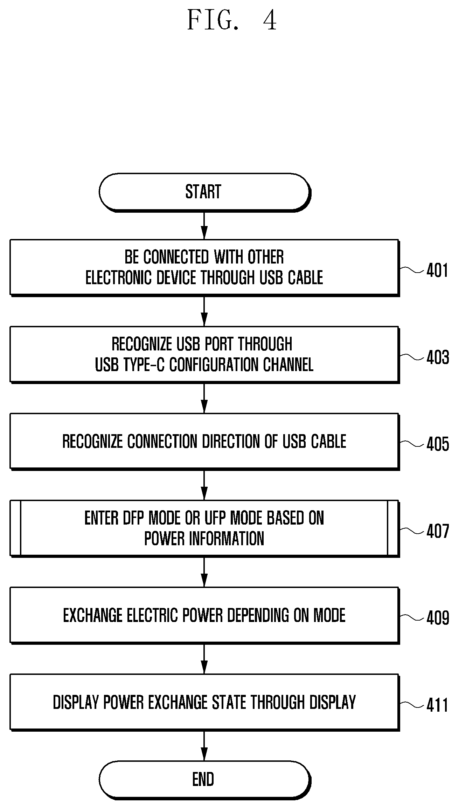

FIG. 4 is a flowchart illustrating a method for managing electric power of an electronic device according to an embodiment of the present invention.

At step 401, the electronic device 200 may be connected with other electronic devices (e.g., the electronic device 102 or 104 or the server 106) through a USB cable.

For the connection of the USB cable, the electronic device 200 and other electronic device 102 or 104, or the server 106, may include the USB 274 in the interface 270. The USB 274 contained in each of the electronic device 200 and other electronic device may be a USB type-C.

USB type-C is a kind of USB interface defined in the USB standards. The interface of the USB 274, including a USB type-C interface, enables the electronic device 200 or other electronic device to be used as one of a host device and a slave device.

In an embodiment, when the electronic device 200 having the USB type-C interface enters a dual role port (DRP) mode, the electronic device 200 may perform either the role of a host device or the role of a slave device.

In an embodiment, when the electronic device 200 having the USB type-C interface enters a downstream facing port (DFP) mode, the electronic device 200 may perform the role of a host device with regard to any other electronic device 102 or 104, or the server 106, connected through a USB cable.

Additionally, in the DFP mode, the electronic device 200 may operate as a source for delivering electric power to the connected other electronic device or operate as a hub for delivering data.

In an embodiment, when the electronic device 200 having the USB type-C interface enters an upstream facing port (UFP) mode, the electronic device 200 may perform the role of a slave device with regard to any other electronic device 102 or 104, or the server 106, connected through a USB cable.

Additionally, in the UFP mode, the electronic device 200 may operate as a link for receiving electric power from the connected other electronic device or receive data.

At step 403, the electronic device 200 recognizes, through a USB type-C configuration channel, a USB port to which a USB cable is connected.

After the USB port is recognized, the electronic device 200 recognizes a connection direction of the USB cable at step 405. The interface of the USB 274, including the USB type-C interface, may recognize a device regardless of an insertion direction of the USB cable. When the USB cable is inserted into the USB port, the electronic device 200 calculates a resistance value through the configuration channel and thereby detects the connection direction of the USB cable.

After the connection direction of the USB cable is recognized, the electronic device 200 enters the DFP mode or the UFP mode at step 407, based on power information.

The interface of the USB 274, including the USB type-C interface, performs power delivery protocol communication through the configuration channel and also allows the exchange of power information between electronic devices.

The electronic device 200 having the USB type-C interface may exchange power information with the other electronic device through the configuration channel, based on a biphase mark code (BMC).

The electronic device 200 compares power information thereof with power information received from the other electronic device. Then, based on the result of comparison, the electronic device 200 determines whether to enter the DFP mode or enter the UFP mode.

At step 409, the electronic device 200 exchanges electric power with the other electronic device, depending on the determined mode.

In an embodiment, when the electronic device 200 enters the DFP mode, the other electronic device 102 or 104, or the server 106 connected through the USB cable enters the UFP mode.

The electronic device 200 that enters the DFP mode delivers electric power stored in the battery 296 to the other electronic device 102 or 104, or the server 106 connected through the USB cable.

In an embodiment, when the electronic device 200 enters the UFP mode, the other electronic device 102 or 104, or the server 106 connected through the USB cable enters the DFP mode.

The electronic device 200 that enters the DFP mode receives electric power from the other electronic device 102 or 104, or the server 106 connected through the USB cable and then stores the received power in the battery 296.

At step 411, the electronic device 200 displays a power exchange state through the display 260.

In an embodiment, using a graphical user interface (GUI), a power exchange state of the electronic device 200 may be displayed in the form of a battery-shaped graphical element being charged or discharged.

In an embodiment, using a message window or a popup window, a power exchange state of the electronic device 200 may be displayed in the form of text or any other indication for indicating a charge or discharge status of the battery 296.

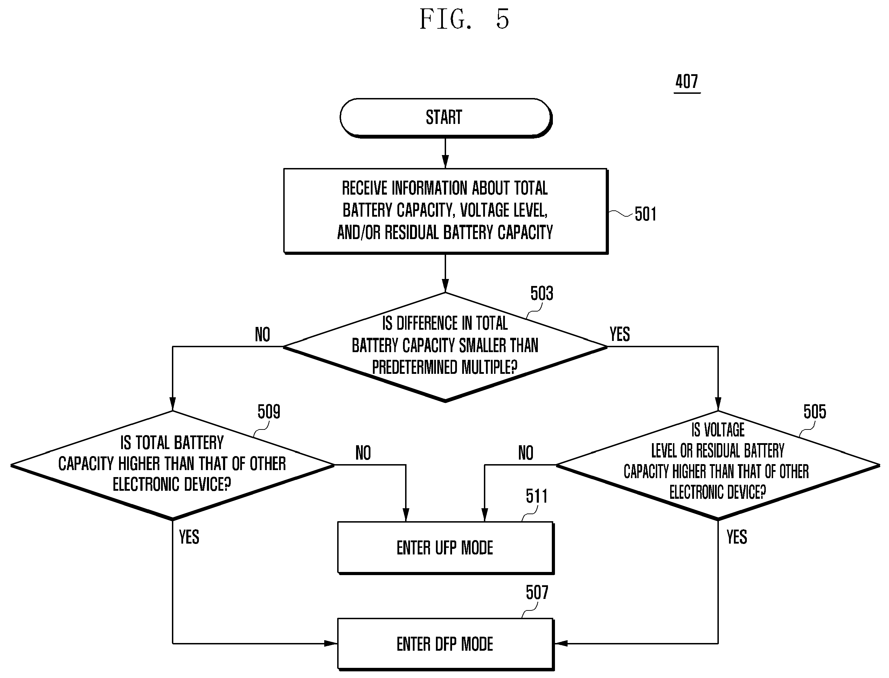

FIG. 5 is a flowchart illustrating a step of entering a DFP mode or a UFP mode depending on power information of an electronic device according to an embodiment of the present invention.

The electronic device 200 may exchange power information with any other connected electronic device through the configuration channel, based on the BMC.

At step 501, the electronic device 200 receives at least one of information about a total battery capacity, information about a voltage level, and information about a residual battery capacity from the other electronic device 102 or 104, or the server 106 connected through the USB cable.

Namely, power information to be exchanged may include, for example, information about a total battery capacity, information about a voltage level, and/or information about a residual battery capacity.

Information about a total battery capacity refers to information about the maximum capacity of stored electric power in the battery 296 of the electronic device 200 or the other connected electronic device. For example, this information about a total battery capacity may be represented as the product (e.g., ampere-hour; (Ah)) of a current (e.g., ampere (A)) and a time (e.g., hour (h)). Therefore, a total battery capacity is proportional to a value of ampere-hour (Ah).

Information about a voltage level may refer to information about a voltage level indicated by the battery 296 of the electronic device 200 or the other connected electronic device. For example, this information about a voltage level may be obtained through the PMIC contained in the PMM 295.

Information about a residual battery capacity may refer to information about a percentage of remaining power in the battery 296. For example, this information about a residual battery capacity may be information about a battery gauge value obtained through the PMIC.

At step 503, the electronic device 200 compares a total battery capacity thereof with that of the other electronic device connected thereto, based on the received information about a total battery capacity. Then, based on the result of comparison, the electronic device 200 determines whether a difference in total battery capacity is smaller than a predetermined multiple.

For example, if a difference in total battery capacity between the electronic device 200 and the other electronic device is three times the capacity or more, it is desirable to supply electric power from one device having a greater capacity to the other having a smaller capacity. For example, when a laptop PC and a smart phone are connected with each other through the USB cable, a difference in total battery capacity greater than a predetermined multiple may occur.

If a difference in total battery capacity is smaller than a predetermined multiple in step 503, the electronic device 200 compares, at step 505, a voltage level thereof with that of the other electronic device connected thereto, based on the received information about a voltage level. Then, based on the result of comparison, the electronic device 200 determines whether a voltage level thereof is higher than that of the other electronic device. Alternatively, instead of a voltage level, a residual battery capacity may be used for the above comparison and determination.

If a voltage level or residual battery capacity of the electronic device 200 is higher than that of the other electronic device, the electronic device 200 enters the DFP mode at step 507.

If a voltage level or residual battery capacity of the electronic device 200 is not higher than that of the other electronic device, the electronic device 200 enters the UFP mode at step 511.

Meanwhile, if a difference in total battery capacity is not smaller than a predetermined multiple in step 503, the electronic device 200 determines, at step 509, whether a total battery capacity thereof is higher than a voltage level or total battery capacity of the other electronic device.

If a total battery capacity of the electronic device 200 is higher than a voltage level or total battery capacity of the other electronic device, the electronic device 200 enters the DFP mode at step 507.

If a total battery capacity of the electronic device 200 is not higher than a voltage level or total battery capacity of the other electronic device, the electronic device 200 enters the UFP mode at step 511.

The above-discussed steps of FIGS. 4 and 5 may be controlled through the processor 120, the AP 210 or the PMM 295 included in the electronic device 200.

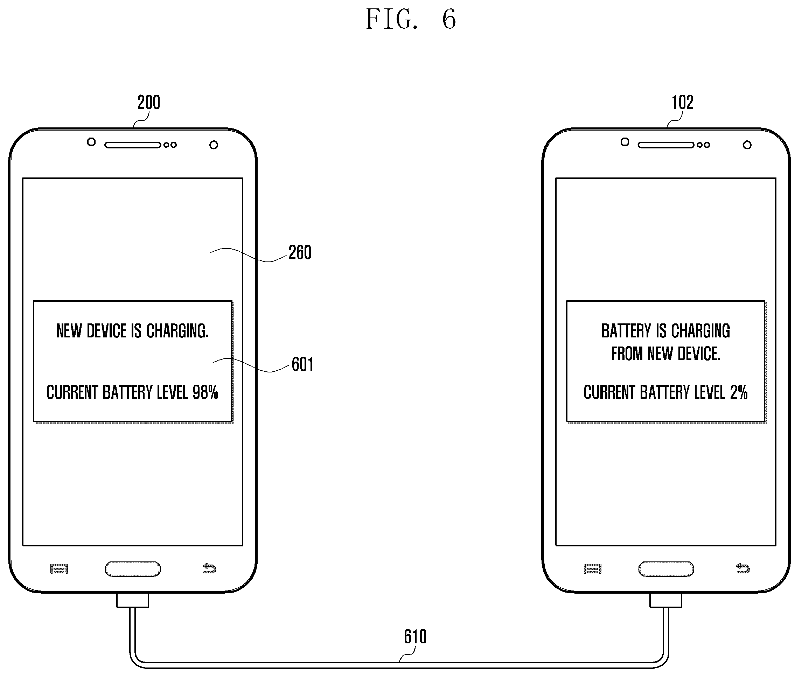

FIG. 6 is a diagram illustrating a user interface indicating a power exchange state of an electronic device according to an embodiment of the present invention.

When the electronic device 200 is connected with other electronic device 102 through a USB cable 610, the electronic device 200 exchanges power information with the other electronic device 102 as discussed above. Then, if a voltage level or residual battery capacity of the electronic device 200 is higher than that of the other electronic device 102, the electronic device 200 enters the DFP mode and performs the role of a host device. At this time, the other electronic device 102 enters the UFP mode and performs the role of a slave device.

The electronic device 200 that enters the DFP mode supplies electric power to the other electronic device 102 by operating as a source. Meanwhile, the other electronic device 102 that enters the UFP mode receives electric power from the electronic device 200 by operating as a link.

Additionally, the electronic device 200 may display a power exchange state through the display module 260. Specifically, the electronic device 200 may display a message window 601 (or referred to as a popup window) and also display, on the message window 601, a message that indicates a status of supplying or not electric power, and a current residual battery capacity. For example, in the DFP mode, the electronic device 200 may display on the message window 601 a message "New device is charging. Current battery level 98%". Similarly, in the UFP mode, the other electronic device 102 may display a message "Battery is charging from new device. Current battery level 2%".

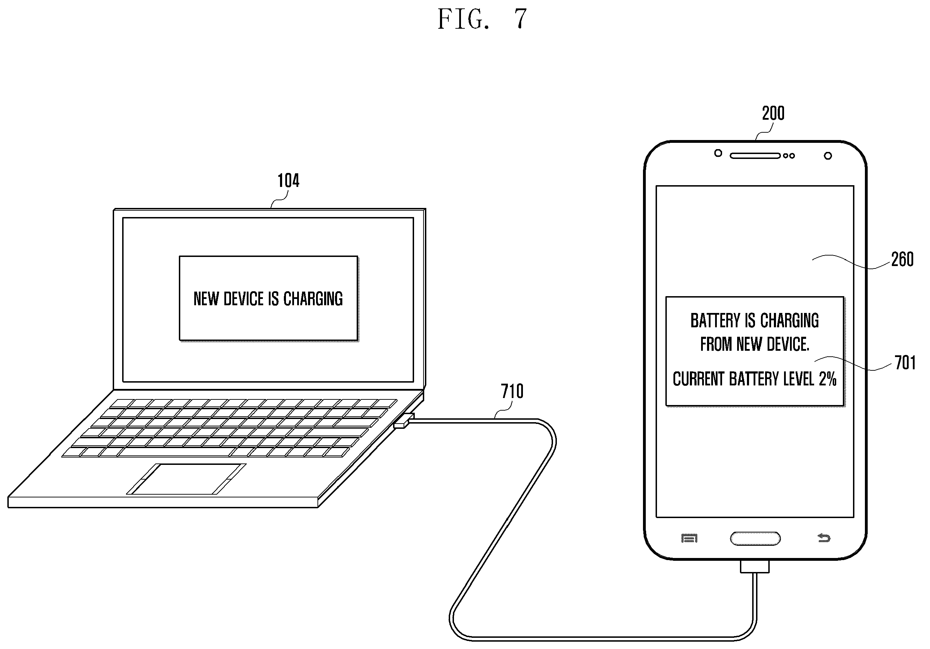

FIG. 7 is a diagram illustrating a user interface indicating a power exchange state of an electronic device according to another embodiment of the present invention.

When the electronic device 200 is connected with other electronic device 104 through a USB cable 710, the electronic device 200 exchanges power information with the other electronic device 104 as discussed above. Then, if a difference in total battery capacity between the electronic device 200 and the other electronic device 104 is greater than a predetermined multiple, and if a total battery capacity of the electronic device 200 is smaller than that of the other electronic device 104, the electronic device 200 enters the UFP mode and performs the role of a slave device. At this time, the other electronic device 104 enters the DFP mode and performs the role of a host device.

The electronic device 200 that enters the UFP mode receives electric power from the other electronic device 104 by operating as a link. Meanwhile, the other electronic device 104 that enters the DFP mode supplies electric power to the electronic device 200 by operating as a source.

Additionally, the electronic device 200 may display a power exchange state through the display module 260. Specifically, the electronic device 200 may display a message window or popup window 701 and also display, on the message window 701, a message that indicates a status of supplying or not electric power, and a current residual battery capacity. For example, in the UFP mode, the electronic device 200 may display on the message window 701 a message "Battery is charging from new device. Current battery level 2%". Similarly, in the DFP mode, the other electronic device 104 may display a message "New device is charging".

As fully discussed herein, according to various embodiments of the present invention, electronic devices having a USB type-C interface can exchange power information with each other through power delivery protocol communication, and one electronic device can automatically determine, without any user intervention, whether to supply or receive electric power to or from the other electronic device, based on such power information.

While the present invention has been particularly shown and described with reference to certain embodiments thereof, it will be understood by those skilled in the art that various changes in form and details may be made therein without departing from the spirit and scope of this invention as defined by the appended claims and their equivalents.

## Claims

1. A power management method of an electronic device having a universal serial bus (USB) type-C interface, the method comprising:
recognizing a USB port through a configuration channel when the electronic device is connected with another electronic device through a USB cable;
recognizing a connection direction of the USB cable;
receiving power information from the other electronic device through the configuration channel; and
determining, based on the received power information, whether to enter a downstream facing port (DFP) mode or an upstream facing port (UFP) mode.

2. The method of claim 1, further comprising:
exchanging electric power with the other electronic device, depending on the DFP mode or the UFP mode;
displaying a state of exchanging electric power with the other electronic device through a display;
supplying electric power to the other electronic device when the electronic device enters the DFP mode; and
receiving electric power from the other electronic device when the electronic device enters the UFP mode.

3. The method of claim 1, wherein determining whether to enter the DFP mode or the UFP mode comprises:
receiving at least one of information about a total battery capacity, information about a voltage level, and information about a residual battery capacity from the other electronic device through the configuration channel;
comparing a total battery capacity of the electronic device with a total battery capacity of the other electronic device, based on the received information, and then determining whether a difference in total battery capacity is smaller than a predetermined multiple;
if the difference in total battery capacity is not smaller than the predetermined multiple, determining whether the total battery capacity of the electronic device is higher than the total battery capacity of the other electronic device; and
if the total battery capacity of the electronic device is higher than the total battery capacity of the other electronic device, entering the DFP mode.

4. The method of claim 3, wherein determining whether to enter the DFP mode or the UFP mode further comprises:
if the total battery capacity of the electronic device is not higher than the total battery capacity of the other electronic device, entering the UFP mode.

5. The method of claim 3, wherein determining whether to enter the DFP mode or the UFP mode further comprises:
if the difference in total battery capacity is smaller than the predetermined multiple, comparing a voltage level or residual battery capacity of the electronic device with a voltage level or residual battery capacity of the other electronic device, based on the received information, and then determining whether the voltage level or residual battery capacity of the electronic device is higher than the voltage level or residual battery capacity of the other electronic device; and
if the voltage level or residual battery capacity of the electronic device is higher than the voltage level or residual battery capacity of the other electronic device, entering the DFP mode.

6. The method of claim 5, wherein determining whether to enter the DFP mode or the UFP mode further comprises:
if the voltage level or residual battery capacity of the electronic device is not higher than the voltage level or residual battery capacity of the other electronic device, entering the UFP mode.

7. The method of claim 1, wherein the power information is based on a biphase mark code (BMC).

8. An electronic device comprising:
a universal serial bus (USB) type-C interface;
a display;
a battery; and
configured to control the USB type-C interface, the display, and the battery,where to recognize a USB port through a configuration channel when the electronic device is connected with another electronic device through a USB cable, to recognize a connection direction of the USB cable, to receive power information from the other electronic device through the configuration channel, and to determine, based on the received power information, whether to enter a downstream facing port (DFP) mode or an upstream facing port (UFP) mode.

9. The electronic device of claim 8, wherein the processor is further configured to control the battery to exchange electric power with the other electronic device, depending on the DFP mode or the UFP mode, control the battery to supply electric power to the other electronic device when the electronic device enters the DFP mode, and control the battery to receive electric power from the other electronic device when the electronic device enters the UFP mode.

10. The electronic device of claim 9, wherein the processor is further configured to control the display to display a state of exchanging electric power with the other electronic device.

11. The electronic device of claim 8, wherein the processor is further configured to:
receive at least one of information about a total battery capacity, information about a voltage level, and information about a residual battery capacity from the other electronic device through the configuration channel;
compare a total battery capacity of the electronic device with a total battery capacity of the other electronic device, based on the received information, and then determine whether a difference in total battery capacity is smaller than a predetermined multiple;
if the difference in total battery capacity is not smaller than the predetermined multiple, determine whether the total battery capacity of the electronic device is higher than the total battery capacity of the other electronic device; and
if the total battery capacity of the electronic device is higher than the total battery capacity of the other electronic device, enter the DFP mode.

12. The electronic device of claim 11, wherein the processor is further configured to:
if the total battery capacity of the electronic device is not higher than the total battery capacity of the other electronic device, enter the UFP mode.

13. The electronic device of claim 11, wherein the processor is further configured to:
if the difference in total battery capacity is smaller than the predetermined multiple, compare a voltage level or residual battery capacity of the electronic device with a voltage level or residual battery capacity of the other electronic device, based on the received information, and then determine whether the voltage level or residual battery capacity of the electronic device is higher than the voltage level or residual battery capacity of the other electronic device; and
if the voltage level or residual battery capacity of the electronic device is higher than the voltage level or residual battery capacity of the other electronic device, enter the DFP mode.

14. The electronic device of claim 13, wherein the processor is further configured to:
if the voltage level or residual battery capacity of the electronic device is not higher than the voltage level or residual battery capacity of the other electronic device, enter the UFP mode.

15. The electronic device of claim 8, wherein the power information is based on a biphase mark code (BMC).
